# EUROPEAN PATENT SPECIFICATION

(11) **EP 1 972 774 B1**
(45) Date of publication and mention of the grant of the patent: **03.10.2018**
(21) Application number: 08250825.0
(22) Date of filing: 11.03.2008
(51) Int. Cl.: F02K 1/09, F02C 7/047, B64D 15/00, F02K 1/12

(54) **VARIABLE AREA FAN NOZZLE, CORRESPONDING GAS TURBINE ENGINE SYSTEM AND METHOD OF CONTROLLING**
FANSCHUBDÜSE MIT VARIABLEM QUERSCHNITT, ZUGEHÖRIGES GASTURBINENTRIEBWERKSSYSTEM UND ENTSPRECHENDES REGELUNGSVERFAHREN
TUYÈRE DE SOUFFLANTE À SECTION VARIABLE, SYSTÈME DE MOTEUR À TURBINE À GAZ ET PROCÉDÉ DE CONTRÔLE ASSOCIÉS

(30) Priority: 22.03.2007 US 689651
(43) Date of publication of application: 24.09.2008
(73) Proprietor: United Technologies Corporation, Farmington, CT 06032 (US)
(72) Inventor: Roberge, Gary D., Tolland, CT 06084 (US); Lejambre, Charles R., New Britain, CT 06053 (US); Watson, Charles R., Windsor, CT 06095 (US)
(74) Representative: Dehns

(56) References cited:
- US-A- 5 080 284
- US-A1- 2002 125 340
- US-A1- 2006 281 861
- US-B1- 6 352 211
- US-B2- 7 093 793

## Description

This invention relates to gas turbine engines and, more particularly, to a gas turbine engine having a variable fan nozzle that includes a protective coating.

Gas turbine engines are widely known and used for vehicle (e.g., aircraft) propulsion. A typical gas turbine engine includes a compression section, a combustion section, and a turbine section that utilize a core airflow into the engine to propel the vehicle. The gas turbine engine is typically mounted within an outer structure, such as a nacelle. A bypass airflow flows through a passage between the outer structure and the engine, and exits from the engine at an outlet.

Presently, conventional gas turbine engines are designed to operate within a desired performance envelope under certain predetermined flight conditions, such as cruise. Conventional engines tend to approach or exceed the boundaries of the desired performance envelope under flight conditions outside of cruise, such as take-off and landing, which may undesirably lead to less efficient engine operation. For example, the size of the fan and the ratio of the bypass airflow to the core airflow are designed to maintain a desired pressure ratio across the fan during take-off to prevent choking of the bypass flow in the passage. However, during cruise, the bypass flow is reduced in the passage and the fuel burn of the engine is negatively impacted. Since engines operate for extended periods of time at cruise, the take-off design constraint exacerbates the fuel burn impact.

Therefore, there is a need to control the bypass airflow over a wider variety of different flight conditions to enable enhanced control of engine operation and to reduce fuel burn.

US 7093793 B2 describes a variable area fan nozzle according to the preamble of claim 1. US 2002/0125340 A1, US 6352211 B1 and US 5080284 describe the use of thermal barrier coatings for thermal protection from core exhaust gases. US 2006/281861 A1 describes the use of icephobic coatings to prevent build up of ice to avoid the use of high temperature air from the core.

A variable area fan nozzle, according to the invention, for use with a gas turbine engine system includes a nozzle section that is movable between a plurality of positions to change an effective area associated with a bypass airflow through a fan bypass passage of a gas turbine engine. A protective coating is disposed on the nozzle section and resists change in the effective area of the nozzle section caused by environmental conditions. The protective coating comprises an anti-icing coating having an ice adhesion strength that is less than an ice adhesion strength of the nozzle section. For example, the protective coating includes material that resists ice formation and erosion of the nozzle section.

In one preferred embodiment, the example variable area fan nozzle having the protective coating is utilized within a gas turbine engine system to resist change in the effective area of the nozzle and thereby provide control over the effective area of the nozzle. For example, the protective coating resists ice formation and erosion that might otherwise artificially change the effective area of the nozzle.

According to another aspect, the variable area fan nozzle according to the invention is used in a gas turbine engine system comprising: a fan; a structure arranged about the fan; an engine core having a compressor and a turbine at least partially within the structure; a fan bypass passage between the structure and the engine core.

According to yet another aspect, the invention provides a method of controlling an effective area associated with a variable nozzle section of a gas turbine engine, the method comprising: applying a protective coating on the variable nozzle section to resist a change in an effective area of the nozzle section from environmental conditions. The method further includes selecting the protective coating to have an ice adhesion strength that is less than an ice adhesion strength of the variable nozzle section.

The various features and advantages of this invention will become apparent to those skilled in the art from the following detailed description of preferred embodiments of the invention, which is given by way of example only, and with reference to the accompanying drawings in which:
Figure 1 illustrates selected portions of a gas turbine engine system having a variable area fan nozzle according to an embodiment of the invention.
Figure 2 illustrates selected portions of a nozzle configuration utilizing a protective coating in accordance with an embodiment of the invention.
Figure 3 illustrates selected portions of a nozzle configuration utilizing a protective coating in accordance with another embodiment of the invention.

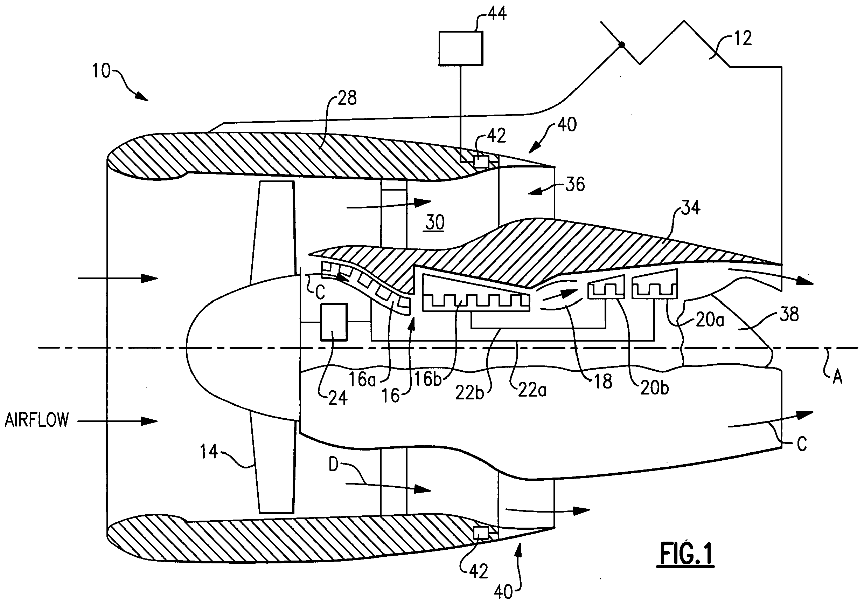

Figure 1 illustrates a schematic view of selected portions of an embodiment of a gas turbine engine 10 suspended from an engine pylon 12 of an aircraft, as is typical of an aircraft designed for subsonic operation. The gas turbine engine 10 is circumferentially disposed about an engine centerline, or axial centerline axis A. The gas turbine engine 10 includes a fan 14, a low pressure compressor 16a, a high pressure compressor 16b, a combustion section 18, a high pressure turbine 20b, and a low pressure turbine 20a. As is well known in the art, air compressed in the compressors 16a, 16b is mixed with fuel that is burned in the combustion section 18 and expanded in the turbines 20a and 20b. The turbines 20a and 20b are coupled for rotation with, respectively, rotors 22a and 22b (e.g., spools) to rotationally drive the compressors 16a, 16b and the fan 14 in response to the expansion. In this embodiment, the rotor 22a also drives the fan 14 through a gear train 24.

In the embodiment shown, the gas turbine engine 10 is a high bypass geared turbofan arrangement. In one embodiment, the bypass ratio is greater than 10:1, and the fan 14 diameter is substantially larger than the diameter of the low pressure compressor 16a. The low pressure turbine 20a has a pressure ratio that is greater than 5:1, in one embodiment. The gear train 24 can be any known suitable gear system, such as a planetary gear system with orbiting planet gears, planetary system with non-orbiting planet gears, or other type of gear system. In the disclosed example, the gear train 24 has a constant gear ratio. Given this description, one of ordinary skill in the art will recognize that the above parameters are only exemplary and that other parameters may be used to meet the particular needs of an implementation.

An outer housing, nacelle 28, (also commonly referred to as a fan nacelle) extends circumferentially about the fan 14. A generally annular fan bypass passage 30 extends between the nacelle 28 and an inner housing, inner cowl 34, which generally surrounds the compressors 16a, 16b and turbines 20a, 20b.

In operation, the fan 14 draws air into the gas turbine engine 10 as a core flow, C, and into the bypass passage 30 as a bypass air flow, D. In one example, approximately 80 percent of the airflow entering the nacelle 28 becomes bypass airflow D. A rear exhaust 36 discharges the bypass air flow D from the gas turbine engine 10. The core flow C is discharged from a passage between the inner cowl 34 and a tail cone 38. A significant amount of thrust may be provided by the bypass airflow D due to the high bypass ratio..

The gas turbine engine 10 shown in Figure 1 also includes a nozzle 40 (shown schematically) associated with the bypass passage 30. In this embodiment, the nozzle 40 is coupled with the trailing edge of the nacelle 28.

The nozzle 40 includes actuators 42 for movement between a plurality of positions to influence the bypass air flow D, such as to manipulate an air pressure of the bypass air flow D. A controller 44 commands the actuators 42 to selectively move the nozzle 40 among the plurality of positions to manipulate the bypass air flow D in a desired manner. The controller 44 may be dedicated to controlling the actuators 42 and nozzle 40, integrated into an existing engine controller within the gas turbine engine 10, or be incorporated with other known aircraft or engine controls. For example, selective movement of the nozzle 40 permits the controller 44 to vary the amount of thrust provided, enhance conditions for aircraft control, enhance conditions for operation of the fan 14, or enhance conditions for operation of other components associated with the bypass passage 30, depending on input parameters into the controller 44.

In one embodiment, the gas turbine engine 10 is designed to operate within a desired performance envelope under certain predetermined conditions, such as cruise. For example, it is desirable to operate the fan 14 under a desired pressure ratio range (i.e., the ratio of air pressure forward of the fan 14 to air pressure aft of the fan 14) to avoid fan flutter. To maintain this range, the nozzle 40 influences the bypass airflow D to control the air pressure aft of the fan 14 and thereby control the pressure ratio. For example, for a cruise condition, the nozzle 40 permits less bypass airflow D, and in a take-off condition the nozzle permits more bypass airflow D. In some examples, the nozzle varies a cross-sectional area associated with the bypass passage 30 by approximately 20% to increase the bypass airflow D for take-off. Thus, the nozzle 40 enables the performance envelope to be maintained over a variety of different flight conditions.

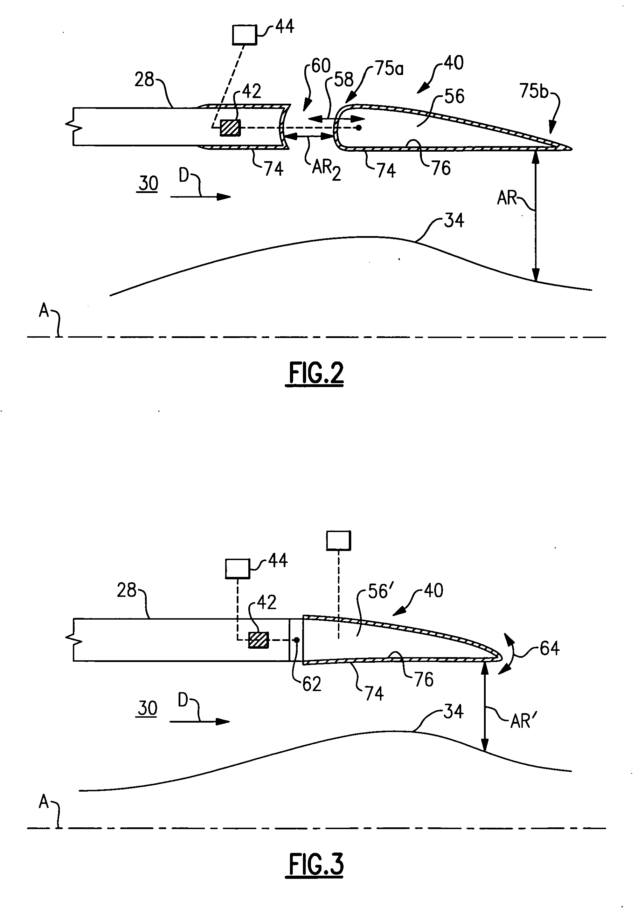

Figure 2 illustrates selected portions of a nozzle 40 of an embodiment of the invention, having a nozzle section 56 that is movable in a generally axial direction 58 between a plurality of different positions to influence the bypass airflow D by changing an effective flow area (e.g., a cross-sectional area) of the nozzle 40. In this example, the nozzle section 56 is operatively connected with the actuator 42 for movement in the axial direction 58. The controller 44 selectively commands the actuator 42 to move the nozzle section 56 to open or close an auxiliary flow path 60 between the nozzle section 56 and the nacelle 28. The effective flow area of the nozzle 40 is the sum of the cross-sectional area between the nozzle section 56 and the inner cowl 34 represented by the distance AR and a cross-sectional area of the auxiliary flow path 60 represented by AR₂.

In an open position, as illustrated, the auxiliary flow path 60 permits at least a portion of the bypass airflow D to exit axially through the nozzle 40 and also radially through the auxiliary flow path 60. In a closed position, the nozzle section 56 abuts against the nacelle 28 such that the bypass airflow D exits only axially. The controller 44 and the actuator 42 cooperate to change the effective flow area of the nozzle 40 by selectively opening or closing the nozzle section 56, depending on flight conditions of an aircraft.

For example, moving the nozzle section 56 to the open position for a relatively larger total flow area permits more bypass airflow D through the nozzle 40 and reduces a pressure build-up (i.e., a decrease in air pressure) within the bypass passage 30. Moving the nozzle section 56 to the closed position for a relatively smaller total flow area restricts the bypass airflow D and produces a pressure build-up (i.e., an increase in air pressure) within the bypass passage 30. Thus, the controller 44 can selectively control the air pressure within the bypass passage 30 to thereby control the pressure ratio across the fan 14 as described above. For example, during take-off, the nozzle section 56 is open to achieve a desired pressure ratio that permits the fan 14 to avoid a flutter condition, prevent choking, and thereby operate more efficiently.

Figure 3 illustrates selected portions of a nozzle 40 of another embodiment of the invention, wherein the nozzle section 56' pivots about a pivot connection 62 along direction 64. In this example, the controller 44 selectively commands the actuator 42 to pivot the nozzle section 56' to selectively vary the flow area represented by AR', which in this example represents the total effective flow area. As can be appreciated from Figure 3, pivoting the nozzle section 56' toward the centerline axis A decreases the flow area AR', and pivoting the nozzle section 56' away from the centerline axis A increases the flow area AR'. As described above, a relatively smaller total flow area restricts the bypass airflow D, and a relatively greater total flow area permits more bypass airflow D through the nozzle 40. It is to be understood that the above example nozzles 40 are not limiting and that other types of variable area nozzles will also benefit from this disclosure.

In the illustrated embodiments, the nozzle section 56, 56' includes a protective coating 74 that resists changes in the effective flow area of the nozzle 40 from environmental conditions. In Figure 2, the protective coating 74 completely encases the underlying nozzle section 56 from a leading end 75a to a trailing end 75b. Alternatively, the protective coating 74 may be located only on particular areas (e.g., only on the leading end 74a) of the nozzle section 56, depending upon the areas that are expected to be susceptible to the environmental conditions, such as ice formation and erosion, for example. In Figure 3, the protective coating covers only an inner and outer surface of the nozzle section 56'. Alternatively, the protective coating is only on the inner surface.

Optionally, a portion of the nacelle 28 also includes a protective coating 74. For example, the protective coating 74 may cover one or more of a trailing end portion of the nacelle 28 (Figure 2), the inner surface of the nacelle 28, the outer surface of the nacelle 28, and an axial surface 75 between the nacelle 28 and the nozzle section 56.

The protective coating 74 resists formation of ice, erosion, or both. Protecting against, and in some cases entirely preventing, ice formation and erosion provides the benefit of maintaining aerodynamically smooth surfaces over the nozzle section 56, 56' and/or nacelle 28, and preventing the effective flow area from artificially and undesirably changing due to ice formation or erosion. The protective coating 74 may also prevent ice from accreting to a size that is large enough to hinder the movement of the nozzle section 56, 56'.

In one example, the protective coating 74 comprises an icephobic material having an ice adhesion strength that is less than an ice adhesion strength of the underlying nozzle section 56, 56'. Additionally, the protective coating 74 may be erosion resistant such that an erosion resistance of the protective coating 74 is greater than an erosion resistance of the underlying nozzle section 56, 56'. For example, the underlying nozzle section 56, 56' may include titanium, aluminum, metallic alloys, or polymer composite. Icephobic characteristics and erosion resistance characteristics may be embodied in a single type of protective coating 74, or the protective coating 74 may utilize a material that is suited for either icephobicity or erosion resistance alone.

In one embodiment, the protective coating 74 includes a material selected from a silicone-based elastomer, a polyurethane-based elastomer, and a fluoropolymer. In a further embodiment, the silicone-based elastomer comprises a high molecular weight polysiloxane, such as platinum cured vinyl terminated polydimethyl siloxane, peroxide cured vinyl terminated polydimethyl siloxane, polyphenylmethyl siloxane, 4-polytrifluoropropylmethyl siloxane, or polydiphenyl siloxane. In a further embodiment, the above materials are used without solid fillers, liquid fillers, or additives to further enhance the icephobic and erosion characteristics of the protective coating 74. In a further embodiment, the protective coating 74 has an ice adhesion strength of no more than about 388 kPa, and in some embodiments, no more than about 200 kPa. Although the above example materials may be effective for protecting the nozzle sections 56, 56', in one example the silicone-based elastomers provide the benefit of icephobicity and erosion resistance because of the lack of fillers and additives. Given this description, one of ordinary skill in the art will recognize other types of icephobic and erosion resistant materials to meet their particular needs.

Optionally, a primer layer 76 may be used between a protective coating 74 and the nozzle section 56, 56' for adhesion. For example, the primer layer 76 includes a silane or titanate coupling agent with or without a catalyst such as platinum, palladium, rhodium. The primer layer 76 and the protective coating 74 may be applied on the nozzle sections 56, 56' using known techniques, such as spray, electrostatic deposition, brushing, dipping, or the like, and cured as needed using known techniques.

The disclosed embodiments thereby provide a nozzle 40 having a nozzle section 56, 56' with the protective coating 74 to resist undesirable variation in the effective flow area from environmental conditions. For example, the protective coating 74 reduces ice formation by entirely preventing ice from adhering to the nozzle 40 or by reducing a rate at which the ice accretes on the nozzle 40. Thus, when the controller 44 moves the nozzle section 56 to a position that is pre-calculated to correspond to an effective flow area, ice formation does not artificially decrease the effective flow area and erosion does not artificially increase the effective flow area from the expected, pre-calculated effective flow area. Thus, using the protective coating 74 on the nozzle section 56, 56' provides the benefit of reliably controlling the nozzle 40 and effective flow area without undue environmental interference.

In preferred embodiments, the nozzle 40 comprises an anti-icing device that is operational to melt or break any ice that forms on the protective coating 74.

Thus it can be seen that at least in preferred embodiments, there is provided a variable area fan nozzle for use with a gas turbine engine system that is provided with a protective coating which comprises an ice phobic material having an ice adhesion strength that is less than an ice adhesion strength of underlying nozzle material in order to resist ice formation.

Although a combination of features is shown in the illustrated embodiments, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A variable area fan nozzle (40) for use with a gas turbine engine system (10), comprising:
a nozzle section (56, 56') that is moveable between a plurality of positions to change an effective area (AR, AR₂, AR') associated with a bypass airflow (D) through a fan bypass passage (30) of a gas turbine engine (10); and **characterized by**
a protective coating (74) on the nozzle section (56, 56') that resists change in the effective area (AR, AR₂, AR') of the nozzle section (56, 56') caused by environmental conditions, wherein the protective coating (74) comprises an anti-icing coating having an ice adhesion strength that is less than an ice adhesion strength of the nozzle section (56, 56').

2. A variable area fan nozzle (40) as claimed in claim 1, wherein the nozzle section (56) is movable in a generally axial direction to change the effective flow area (AR, AR₂) of the nozzle (40).

3. A variable area fan nozzle (40) as claimed in claim 1 or 2, wherein the protective coating (74) comprises an anti-erosion coating having an erosion resistance that is greater than an erosion resistance of the nozzle section (56. 56').

4. A variable area fan nozzle (40) as claimed in claim 3, wherein the nozzle section (56, 56') comprises an outermost surface that comprises a polymer composite material.

5. A variable area fan nozzle (40) as claimed in any preceding claim, wherein the protective coating (74) comprises a silicone-based elastomer.

6. A variable area fan nozzle (40) as claimed in any preceding claim, wherein the protective coating (74) comprises polysiloxane.

7. A variable area fan nozzle (40) as claimed in any preceding claim, wherein the protective coating (74) comprises at least one of a polyurethane-based elastomer and a fluoropolymer.

8. A variable area fan nozzle (40) as claimed in any preceding claim, wherein the protective coating (74) comprises a high molecular weight polysiloxane selected from at least one of platinum cured vinyl terminated polydimethyl siloxane, peroxide cured vinyl terminated polydimethyl siloxane, polyphenylmethyl siloxane, 4-polytrifluoropropylmethyl siloxane, and polydiphenyl siloxane.

9. A variable area fan nozzle (40) as claimed in any preceding claim, wherein the protective coating (74) is located on a leading edge (75a) of the nozzle section (56, 56').

10. A variable area fan nozzle (40) as claimed in any preceding claim, further comprising an anti-icing device that is operational to melt or break any ice that forms on the protective coating (74).

11. A gas turbine engine system (10) comprising:
a fan (14);
a structure (28) arranged about the fan (14);
an engine core having a compressor (16a, 16b) and a turbine (20a, 20b) at least partially within the structure (28);
a fan bypass passage (30) between the structure (28) and the engine core; and
a variable area fan nozzle (40) as claimed in any preceding claim.

12. A gas turbine engine system (10) as claimed in claim 11, wherein the protective coating (74) is provided between the nozzle section (56, 56') and the structure (28).

13. A gas turbine engine system (10) as claimed in claim 11 or 12, wherein the protective coating (74) is provided between the nozzle section (56, 56') and an inner cowl (34) that corresponds to the engine core.

14. A gas turbine engine system (10) as claimed in claim 11, wherein the protective coating (74) is also provided on at least a portion of the structure (28) arranged about the fan (14).

15. A gas turbine engine system (10) as claimed in claim 14, wherein the protective coating (74) is provided on a trailing edge of the structure (28) arranged about the fan (14).

16. A gas turbine engine system (10) as claimed in any of claims 11 to 15, further comprising a controller (44) for selectively moving the nozzle section (56, 56') responsive to one of a plurality of operational states of the gas turbine engine (10).

17. A method of controlling an effective area (AR, AR₂, AR') associated with a variable nozzle section (56, 56') of a gas turbine engine (10), the method **characterized by** comprising:
applying a protective coating (74) on the variable nozzle section (56, 56') to resist a change in an effective area (AR, AR₂, AR') of the nozzle section (56, 56') from environmental conditions, and further including:
selecting the protective coating (74) to have an ice adhesion strength that is less than an ice adhesion strength of the variable nozzle section (56, 56').

18. A method as claimed in claim 17, further including selecting the protective coating (74) to have an erosion resistance that is greater than an erosion resistance of the variable nozzle section (56, 56').

19. A method as claimed in claim 17 or 18, comprising moving the nozzle section (56) in a generally axial direction to change the effective area (AR, AR₂).

## Patentansprüche

1. Fanschubdüse mit variablem Querschnitt (40) zur Verwendung mit einem Gasturbinentriebwerkssystem (10), die Folgendes umfasst:
einen Düsenabschnitt (56, 56'), der zwischen einer Vielzahl von Positionen beweglich ist, um einen wirksamen Querschnitt (AR, AR₂, AR') zu ändern, der mit einem Umgehungsluftstrom (D) durch einen Fanumgehungsdurchlass (30) eines Gasturbinentriebwerks (10) zusammenhängt; und durch Folgendes gekennzeichnet ist:
eine Schutzbeschichtung (74) auf dem Düsenabschnitt (56, 56') der Änderungen des wirksamen Querschnitts (AR, AR₂, AR') des Düsenabschnitts (56, 56'), die durch Umweltbedingungen verursacht sind, wiedersteht, wobei die Schutzbeschichtung (74) eine Antivereisungsbeschichtung umfasst, die eine Eisanhaftungskraft aufweist, die schwächer ist als eine Eisanhaftungskraft des Düsenabschnitts (56, 56').

2. Fanschubdüse mit variablem Querschnitt (40) nach Anspruch 1, wobei der Düsenabschnitt (56) in eine im Allgemeinen axiale Richtung beweglich ist, um den wirksamen Strömungsquerschnitt (AR, AR₂) der Düse (40) zu ändern.

3. Fanschubdüse mit variablem Querschnitt (40) nach Anspruch 1 oder 2, wobei die Schutzbeschichtung (74) eine Erosionsschutzbeschichtung umfasst, die einen Erosionswiderstand aufweist, der größer ist als ein Erosionswiderstand des Düsenabschnitts (56, 56').

4. Fanschubdüse mit variablem Querschnitt (40) nach Anspruch 3, wobei der Düsenabschnitt (56, 56') eine äußerste Fläche umfasst, die ein Polymerverbundmaterial umfasst.

5. Fanschubdüse mit variablem Querschnitt (40) nach einem der vorhergehenden Ansprüche, wobei die Schutzbeschichtung (74) ein Elastomer auf Silikonbasis umfasst.

6. Fanschubdüse mit variablem Querschnitt (40) nach einem der vorhergehenden Ansprüche, wobei die Schutzbeschichtung (74) Polysiloxan umfasst.

7. Fanschubdüse mit variablem Querschnitt (40) nach einem der vorhergehenden Ansprüche, wobei die Schutzbeschichtung (74) mindestens eines von einem Elastomer auf Polyurethanbasis und einem Fluorpolymer umfasst.

8. Fanschubdüse mit variablem Querschnitt (40) nach einem der vorhergehenden Ansprüche, wobei die Schutzbeschichtung (74) ein Polysiloxan mit hohem Molekulargewicht umfasst, ausgewählt aus mindestens einem von platingerhärtetem vinylterminiertem Polydimethylsiloxan, peroxidgehärtetem vinylterminiertem Polydimethylsiloxan, Polyphenylmethylsiloxan, 4-Polytrifluorpropylmethylsiloxan und Polydiphenylsiloxan.

9. Fanschubdüse mit variablem Querschnitt (40) nach einem der vorhergehenden Ansprüche, wobei sich die Schutzbeschichtung (74) auf einer Vorderkante (75a) des Düsenabschnitts (56, 56') befindet.

10. Fanschubdüse mit variablem Querschnitt (40) nach einem der vorhergehenden Ansprüche, die ferner eine Antivereisungsvorrichtung umfasst, die dazu betriebsfähig ist, Eis, das sich auf der Schutzbeschichtung (74) bildet, zu schmelzen oder zu brechen.

11. Gasturbinentriebwerkssystem (10), das Folgendes umfasst:
einen Fan (14);
eine Struktur (28), die um den Fan (14) angeordnet ist;
einen Triebwerkkern, der einen Kompressor (16a, 16b) und eine Turbine (20a, 20b) mindestens teilweise innerhalb der Struktur (28) aufweist;
einen Fanumgehungsdurchlass (30) zwischen der Struktur (28) und dem Triebwerkskern; und
eine Fanschubdüse mit variablem Querschnitt (40) nach einem der vorhergehenden Ansprüche.

12. Gasturbinentriebwerkssystem (10) nach Anspruch 11, wobei die Schutzbeschichtung (74) zwischen dem Düsenabschnitt (56, 56') und der Struktur (28) bereitgestellt ist.

13. Gasturbinentriebwerkssystem (10) nach Anspruch 11 oder 12, wobei die Schutzbeschichtung (74) zwischen dem Düsenabschnitt (56, 56') und einem inneren Aufsatz (34) bereitgestellt ist, der dem Triebwerkkern entspricht.

14. Gasturbinentriebwerkssystem (10) nach Anspruch 11, wobei die Schutzbeschichtung (74) ebenfalls auf mindestens einem Abschnitt der Struktur (28) um den Fan (14) bereitgestellt ist.

15. Gasturbinentriebwerkssystem (10) nach Anspruch 14, wobei die Schutzbeschichtung (74) auf einer Hinterkante der Struktur (28) bereitgestellt ist, die um den Fan (14) angeordnet ist.

16. Gasturbinentriebwerkssystem (10) nach einem der Ansprüche 11 bis 15, das ferner eine Steuerung (44) zum selektiven Bewegen des Düsenabschnitts (56, 56') als Reaktion auf einen einer Vielzahl von Betriebszuständen des Gasturbinentriebwerks (10) umfasst.

17. Verfahren zum Steuern eines wirksamen Querschnitts (AR, AR₂, AR'), der mit einem variablen Düsenquerschnitt (56, 56') eines Gasturbinentriebwerks (10) zusammenhängt, wobei das Verfahren **dadurch gekennzeichnet ist, dass** es Folgendes umfasst:
Aufbringen einer Schutzbeschichtung (74) auf den variablen Düsenabschnitt (56, 56'), um einer Änderung in einem wirksamen Querschnitt (AR, AR₂, AR') des Düsenabschnitts (56, 56') aus Umweltbedingungen zu widerstehen, und das ferner Folgendes beinhaltet:
Auswählen der Schutzbeschichtung (74), damit sie eine Eishaftkraft aufweist, die schwächer ist als die Eishaftkraft des variablen Düsenabschnitts (56, 56').

18. Verfahren nach Anspruch 17, das ferner Auswählen der Schutzbeschichtung (74) beinhaltet, damit sie einen Erosionswiderstand aufweist, der größer ist als ein Erosionswiderstand des variablen Düsenabschnitts (56, 56').

19. Verfahren nach Anspruch 17 oder 18, das Bewegen des Düsenabschnitts (56) in eine im Allgemeinen axiale Richtung umfasst, um den wirksamen Querschnitt (AR, AR₂) zu ändern.

## Revendications

1. Tuyère de soufflante à section variable (40) destinée à être utilisée avec un système de moteur à turbine à gaz (10), comprenant :
une section de tuyère (56, 56') qui est mobile entre une pluralité de positions pour modifier une surface utile (AR, AR₂, AR') associée à un écoulement d'air de dérivation (D) à travers un passage de dérivation de soufflante (30) d'un moteur à turbine à gaz (10) ; et **caractérisée par**
un revêtement de protection (74) sur la section de tuyère (56, 56') qui résiste à une modification de la surface utile (AR, AR₂, AR') de la section de tuyère (56, 56') provoquée par des conditions environnementales, dans laquelle le revêtement de protection (74) comprend un revêtement antigivrage présentant une force d'adhérence du givre qui est inférieure à une force d'adhérence du givre de la section de tuyère (56, 56').

2. Tuyère de soufflante à section variable (40) selon la revendication 1, dans laquelle la section de tuyère (56) est mobile dans une direction généralement axiale pour modifier la surface d'écoulement utile (AR, AR₂) de la tuyère (40).

3. Tuyère de soufflante à section variable (40) selon la revendication 1 ou 2, dans laquelle le revêtement de protection (74) comprend un revêtement anti-érosion présentant une résistance à l'érosion qui est supérieure à une résistance à l'érosion de la section de tuyère (56, 56').

4. Tuyère de soufflante à section variable (40) selon la revendication 3, dans laquelle la section de tuyère (56, 56') comprend une surface la plus externe qui comprend un matériau composite polymère.

5. Tuyère de soufflante à section variable (40) selon une quelconque revendication précédente, dans laquelle le revêtement de protection (74) comprend un élastomère à base de silicone.

6. Tuyère de soufflante à section variable (40) selon une quelconque revendication précédente, dans laquelle le revêtement de protection (74) comprend du polysiloxane.

7. Tuyère de soufflante à section variable (40) selon une quelconque revendication précédente, dans laquelle le revêtement de protection (74) comprend au moins l'un d'un élastomère à base de polyuréthane et d'un polymère fluoré.

8. Tuyère de soufflante à section variable (40) selon une quelconque revendication précédente, dans laquelle le revêtement de protection (74) comprend un polysiloxane à masse moléculaire élevée choisi parmi au moins l'un du polydiméthylsiloxane à terminaison vinyle durci au platine, du polydiméthylsiloxane à terminaison vinyle durci au peroxyde, du polyphénylméthylsiloxane, du 4-polytrifluoropropylméthylsiloxane et du polydiphénylsiloxane.

9. Tuyère de soufflante à section variable (40) selon une quelconque revendication précédente, dans laquelle le revêtement de protection (74) est situé sur un bord d'attaque (75a) de la section de tuyère (56, 56').

10. Tuyère de soufflante à section variable (40) selon une quelconque revendication précédente, comprenant en outre un dispositif antigivrage qui sert à faire fondre ou à briser tout le givre se formant sur le revêtement de protection (74).

11. Système de moteur à turbine à gaz (10) comprenant :
une soufflante (14) ;
une structure (28) agencée autour de la soufflante (14) ;
un noyau de moteur comportant un compresseur (16a, 16b) et une turbine (20a, 20b) au moins partiellement à l'intérieur de la structure (28) ;
un passage de dérivation de soufflante (30) entre la structure (28) et le noyau de moteur ; et
une tuyère de soufflante à section variable (40) selon une quelconque revendication précédente.

12. Système de moteur à turbine à gaz (10) selon la revendication 11, dans lequel le revêtement de protection (74) est prévu entre la section de tuyère (56, 56') et la structure (28) .

13. Système de moteur à turbine à gaz (10) selon la revendication 11 ou 12, dans lequel le revêtement de protection (74) est prévu entre la section de tuyère (56, 56') et un capot interne (34) qui correspond au noyau de moteur.

14. Système de moteur à turbine à gaz (10) selon la revendication 11, dans lequel le revêtement de protection (74) est également prévu sur au moins une partie de la structure (28) agencée autour de la soufflante (14).

15. Système de moteur à turbine à gaz (10) selon la revendication 14, dans lequel le revêtement de protection (74) est prévu sur un bord de fuite de la structure (28) agencée autour de la soufflante (14).

16. Système de moteur à turbine à gaz (10) selon l'une quelconque des revendications 11 à 15, comprenant en outre un dispositif de contrôle (44) pour déplacer sélectivement la section de tuyère (56, 56') en réponse à l'un d'une pluralité d'états de fonctionnement du moteur à turbine à gaz (10).

17. Procédé de contrôle d'une surface utile (AR, AR₂, AR') associée à une section de tuyère variable (56, 56') d'un moteur à turbine à gaz (10), le procédé **caractérisé en ce qu'**il comprend :
l'application d'un revêtement de protection (74) sur la section de tuyère variable (56, 56') pour résister à une modification de la surface utile (AR, AR₂, AR') de la section de tuyère (56, 56') provoquée par des conditions environnementales, et comportant en outre :
la sélection du revêtement de protection (74) pour obtenir une force d'adhérence du givre inférieure à une force d'adhérence du givre de la section de tuyère variable (56, 56').

18. Procédé selon la revendication 17, comportant en outre la sélection du revêtement de protection (74) pour obtenir une résistance à l'érosion qui est supérieure à une résistance à l'érosion de la section de tuyère variable (56, 56').

19. Procédé selon la revendication 17 ou 18, comprenant le déplacement de la section de tuyère (56) dans une direction généralement axiale pour modifier la surface utile (AR, AR₂).
